# EUROPÄISCHE PATENTSCHRIFT

(11) **EP 4 091 932 B1**
(45) Veröffentlichungstag und Bekanntmachung des Hinweises auf die Patenterteilung: **19.08.2026**
(21) Anmeldenummer: 21175064.1
(22) Anmeldetag: 20.05.2021
(51) Int. Cl.: B64C 1/06, B60R 13/02

(54) **BEFESTIGUNGSSYSTEM ZUR BEFESTIGUNG VON VERKLEIDUNGSELEMENTEN IN EINEM FLUGZEUG, INSBESONDERE VON SEITENWAND- UND DADO-PANEELEN**
FIXING SYSTEM FOR FIXING CLADDING ELEMENTS IN AN AIRCRAFT, IN PARTICULAR SIDE WALL AND DADO PANELS
SYSTÈME DE FIXATION DESTINÉ À LA FIXATION D'ÉLÉMENTS DE REVÊTEMENT DANS UN AVION, EN PARTICULIER POUR LA FIXATION DE PAROIS LATÉRALES ET DE PANNEAUX DADO

(43) Veröffentlichungstag der Anmeldung: 23.11.2022
(73) Patentinhaber: Airbus Operations GmbH, 21129 Hamburg (DE)
(72) Erfinder: Wesseloh, Marc, 21129 Hamburg (DE); Marx, Sergej, 21129 Hamburg (DE)
(74) Vertreter: KASTEL Patentanwälte PartG mbB

(56) Entgegenhaltungen:
- EP-A1- 3 015 359
- DE-A1- 102018 130 619
- DE-U1- 20 016 889
- GB-A- 2 436 971
- US-A1- 2014 197 278

## Beschreibung

Die Erfindung betrifft ein Befestigungssystem zur Befestigung von Verkleidungselementen in einem Flugzeug. Insbesondere ist das Befestigungssystem zur Befestigung von Seitenwandpaneelen und Dado-Paneelen geeignet.

In Flugzeugen sind Verkleidungselemente, wie zum Beispiel Seitenwandpaneele und sogenannte Dado-Paneele, angeordnet, um den Innenraum, beispielsweise die Passagierkabine, von den umgebenden Strukturbauteilen abzugrenzen. Dabei sind die Dado-Paneele unterhalb der Seitenwandpaneele angeordnet und bilden zumeist die Verbindung zwischen dem Boden und der Seitenwandpaneele. Die Verkleidungselemente sind an einer Tragstruktur befestigt, beispielsweise an den Spanten eines Flugzeugs.

Zur Montage der Verkleidungselemente an der Tragstruktur dienen Befestigungselemente. Die Montage ist dabei oftmals mit großem Aufwand verbunden, da eine Vielzahl von Verkleidungselementen bzw. Seitenwand- und Dado-Paneelen befestigt und bei der Montage genau ausgerichtet werden müssen, um ein ansprechendes Erscheinungsbild der montierten Paneele zu bieten. Weiterhin soll die Befestigung solide sein und Vibrationen der Paneele verhindern. Ein weiteres Problem stellt in vielen Fällen Kondenswasser dar, das im Bereich der Befestigungen in den Innenraum des Flugzeugs bzw. der Kabine gelangt. Außerdem haben die Befestigungselemente zumeist einen hohen Gewichtsanteil, da bei der Montage der Paneele eine Vielzahl von Befestigungselementen benötigt wird.

EP 3 015 359 A1 offenbart eine Vorrichtung zur Fixierung und elektrischen Kontaktierung eines Verkleidungselements eines Luftfahrzeugs an einer Tragstruktur. Die Vorrichtung umfasst eine Fixiereinrichtung zur lösbaren Fixierung des Verkleidungselements an der Tragstruktur mittels eines hinterschnittenen Vertikalschlitzes und eines darin einführbaren Gleitstücks.

Es ist die Aufgabe der Erfindung, ein Befestigungssystem zur Befestigung von Verkleidungselementen, in einem Flugzeug zu schaffen, das eine schnelle und sichere Befestigung der Verkleidungselemente an der Tragstruktur und ein ansprechendes optisches Erscheinungsbild der befestigten Verkleidungselemente ermöglicht.

Weiterhin soll das Befestigungssystem möglichst leicht sein und eine hohe Flexibilität bieten. Bei der Herstellung und bei der Montage und sollen zudem Kosten reduziert werden.

Insbesondere sollen mit dem Befestigungssystem Verkleidungselemente in Form von Seitenwand- und Dado-Paneele befestigt werden können.

Zur Lösung der Aufgabe schafft die Erfindung ein Befestigungssystem zur Befestigung von Verkleidungselementen in einem Flugzeug, umfassend: mindestens eine Basishalterung zur Befestigung an einer Tragstruktur; und mindestens ein Befestigungselement, das zur Befestigung eines oberen Verkleidungselements und eines unterhalb davon anzuordnenden unteren Verkleidungselements ausgebildet ist und an der Basishalterung befestigbar ist, wobei das Befestigungselement in horizontaler Richtung einstellbar an der Basishalterung befestigbar ist, und das Befestigungselement eine sich in vertikaler Richtung erstreckende erste Aufnahme für ein Befestigungsmittel des oberen Verkleidungselements und eine weitere sich in vertikaler Richtung erstreckende zweite Aufnahme für ein Befestigungsmittel des unteren Verkleidungselements umfasst, wobei die zweite Aufnahme des Befestigungselements derart ausgebildet ist, dass die Position des unteren Verkleidungselements an dem Befestigungselement unabhängig von der Position des oberen Verkleidungselements in vertikaler Richtung einstellbar und fixierbar ist, und die erste Aufnahme des Befestigungselements derart ausgebildet ist, dass die Position des oberen Verkleidungselements an dem Befestigungselement in vertikaler Richtung einstellbar und variabel fixierbar ist, wobei das mindestens eine Befestigungselement ein erstes Befestigungselement und ein zweites Befestigungselement umfasst, wobei das erste Befestigungselement zur Verbindung mit dem zweiten, seitlich anzuordnendem, zweiten Befestigungselement ausgebildet ist, wobei die beiden Befestigungselemente in horizontaler Richtung relativ zueinander einstellbar und aneinander fixierbar sind, wobei
a) die Befestigungselemente im seitlich aneinander befestigten Zustand paarweise relativ zur Basishalterung in horizontaler Richtung verschiebbar sind; und/oder
b) das erste Befestigungselement mindestens ein sich in horizontaler Richtung erstreckendes Langloch zur gegenseitigen Befestigung mit dem zweiten Befestigungselement umfasst; und/oder
c) die beiden seitlich aneinander anzuordnenden Befestigungselemente komplementär zueinander ausgebildet sind, um sich im seitlich aneinandergefügten Zustand jeweils mit einem Teilbereich zu überlappen.

Vorzugsweise ist das obere Verkleidungselement als ein Seitenwandpaneel ausgebildet, und bevorzugt ist das untere Verkleidungselement als ein Dado-Paneel ausgebildet.

Das Befestigungsmittel ist bevorzugt pilzkopfförmig ausgebildet.

Insbesondere weist das Befestigungselement mindestens einen nach oben geöffneten Schlitz und mindestens einen nach unten geöffneten Schlitz auf, die sich in vertikaler Richtung erstrecken, um das obere Verkleidungselement von oben und das untere Verkleidungselement von unten in das Befestigungselement einzuschieben.

Vorteilhafterweise umfasst das Befestigungselement ein oder mehrere sich in horizontaler Richtung erstreckende weitere Langlöcher zur Befestigung an der Basishalterung.

Vorteilhaft ist die Basishalterung zur symmetrischen Befestigung an zwei sich gegenüber liegenden Seiten der Tragstruktur ausgebildet.

D. h., die Tragstrukturhalterung kann sowohl an der einen Seite als auch an der anderen Seite bzw. Seitenfläche der Tragstruktur befestigt werden, ohne dass sich dabei ein Unterschied ergibt.

Bevorzugt ist die Basishalterung zusammen mit einer weiteren Basishalterung zur paarweisen Befestigung an sich gegenüber liegenden Seiten der Tragstruktur ausgebildet ist, um ein Paar von Befestigungselementen an dem Paar von Basishalterungen zu befestigen.

Insbesondere weisen die beiden Basishalterungen eine identische Form auf bzw. sind identisch ausgebildet

Insbesondere ist die Basishalterung als ein Klasse-A-Bracket zur festen Fixierung an der Tragstruktur ausgebildet. Vorteilhaft ist das Befestigungselement ist als ein Klasse-B-Bracket zur lösbaren Befestigung an dem Klasse-A-Bracket ausgebildet.

Bevorzugt ist das Befestigungselement an seiner dem Schlitz gegenüberliegenden Seite offen.

Vorzugsweise ist das Befestigungssystem bzw. seine einzelnen Komponenten aus Kunststoff gefertigt, vorteilhafterweise durch Spritzgießen.

Ein Ausführungsbeispiel der Erfindung wird im Folgenden anhand der beigefügten Zeichnungen näher erläutert. Darin zeigt:
- **Figur 1**: ein Befestigungssystem gemäß einer bevorzugten Ausführungsform der Erfindung, das an einem Spant eines Flugzeugs befestigt ist, in einer schematischen Ansicht schräg von vorne links;
- **Figur 2a bis d**: das in Figur 1 gezeigte Befestigungssystem in einer schematischen Ansicht schräg von vorne rechts (Figur 2a), als Explosionsdarstellung (Figur 2b), als Ansicht schräg von hinten oben (Figur 2c) und als schematische Ansicht seiner Rückseite (Figur 2d);
- **Figur 3**: eine Anordnung mehrerer Seitenwandpaneele und Dado-Paneele, die mit dem erfindungsgemäßen Befestigungssystem befestigt sind, als schematische Darstellung von vorne;
- **Fig. 4**: eine Ansicht schräg von oben auf das in den Figuren 1 und 2a-d gezeigte Befestigungssystem in seiner paarweisen Konfiguration, das beidseitig am Spant befestigt ist; und
- **Fig. 5**: eine Kabine eines Flugzeugs, welche mit Verkleidungselementen versehen ist, als schematische Ansicht von oben.

In den Figuren sind gleiche oder einander entsprechende Elemente jeweils mit den gleichen Bezugszeichen bezeichnet und werden daher nicht erneut beschrieben, sofern dies nicht zweckmäßig erscheint. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie zum Beispiel oben, unten, seitlich usw. auf die unmittelbar beschriebene sowie dargestellte Figur bezogen, und sind bei einer Lageänderung sinngemäß auf die neue Lage zu übertragen. Sofern nicht anders angegeben beziehen sich die Lageangaben oben, unten, seitlich, vorne, hinten auf den eingebauten Zustand des Befestigungssystems.

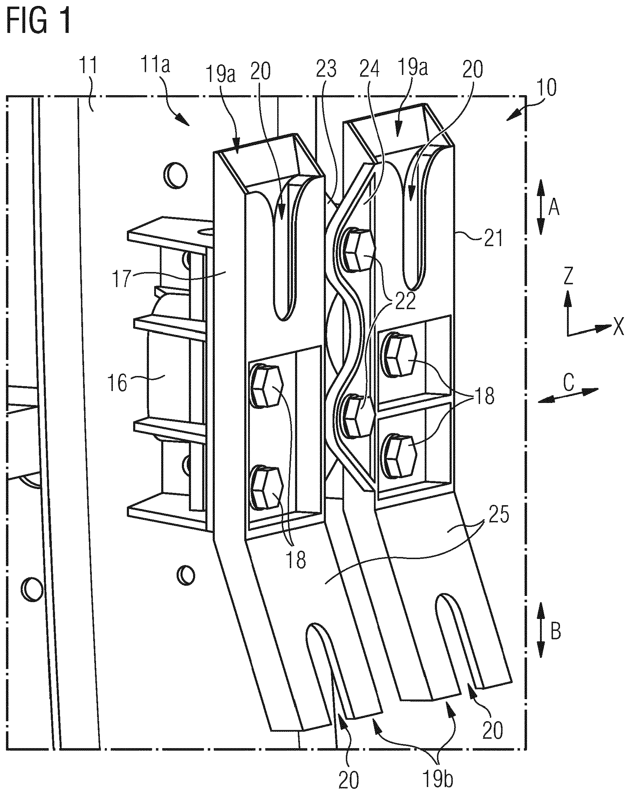

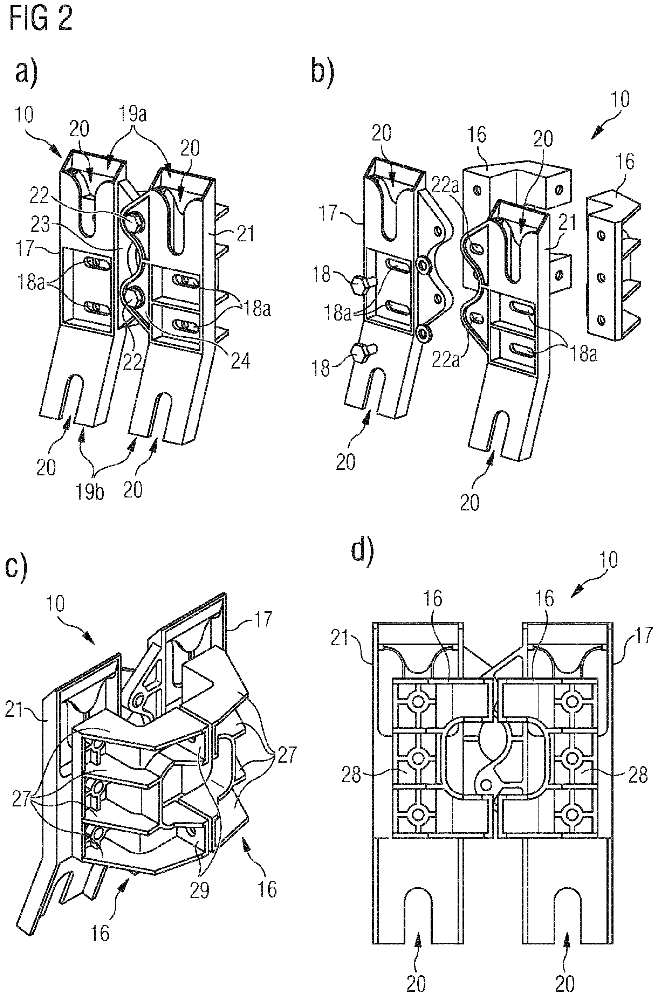

Anhand der **Figuren 1** **und** **2a****-d** wird nachfolgend ein Befestigungssystem 10 gemäß einer bevorzugten Ausführungsform der Erfindung beschrieben. Dabei zeigt Figur 1 das Befestigungssystem 10 in einer paarweisen Konfiguration als Ansicht schräg von vorne links, wobei es an einem Spant 11 eines Flugzeugrumpfes befestigt ist, der eine Tragstruktur bzw. einen Teil davon bildet. Die Figuren 2a-d zeigen das Befestigungssystem 10 ohne die Tragstruktur 11 in verschiedenen Ansichten zur Veranschaulichung weiterer Details.

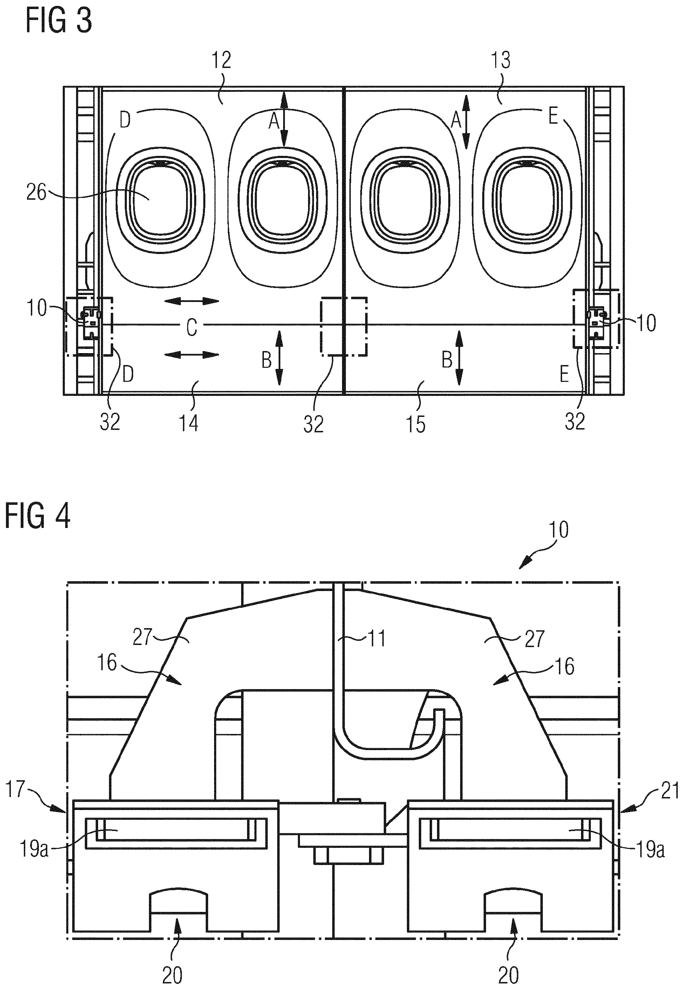

Das Befestigungssystem 10 dient zur Befestigung von Verkleidungselementen 12, 13, 14, 15, wie sie beispielhaft in **Figur 3** dargestellt sind. In dem dort gezeigten Beispiel sind die Verkleidungselemente als Seitenwandpaneele 12, 13 und als unterhalb der Seitenwandpaneele 12, 13 angeordnete Dado-Paneele 14, 15 in einer Kabine ausgebildet. In den Seitenwandpaneelen 12, 13 befinden sich Fensteröffnungen 26

Wie in **Fig. 1** gezeigt umfasst das Befestigungssystem 10 mindestens eine Basishalterung 16, die zur Befestigung an der Tragstruktur 11 ausgebildet ist. In der hier dargestellten paarweisen Konfiguration des Befestigungssystems 10 werden zwei identisch bzw. symmetrisch ausgebildete Basishalterungen 16 verwendet, um sie an beiden Seiten der Tragstruktur 11a zu befestigen.

Das Befestigungssystem 10 kann aber auch in einer Einzelkonfiguration verwendet werden, in der lediglich eine Basishalterung 16 vorgesehen ist und an der Tragstruktur 11 befestigt wird. Dies ist am seitlichen Ende einer Anordnung von Verkleidungselementen vorteilhaft, zum Beispiel im Fall einer angrenzenden Tür.

Weiterhin umfasst das Befestigungssystem 10 Befestigungselemente 17, 21, die zur Befestigung eines oberen Verkleidungselements 12 bzw. 13 und eines unterhalb davon anzuordnenden unteren Verkleidungselements 14 bzw. 15 ausgebildet sind (s. Figs. 1 und 3).

Das Befestigungssystem 10 verwendet zwei Befestigungselemente 17, 21, von denen jeweils eines an einer der beiden Basishalterungen 16 befestigt wird.

Zur Befestigung des oberen Verkleidungselements 11, 12 dient eine am oberen Ende des Befestigungselements 16 angeordnete Aufnahme 19a. Zur Befestigung des unteren Verkleidungselements 13, 14 dient eine am unteren Ende des Befestigungselements 16 angeordnete Aufnahme 19b.

Die Aufnahmen 19a, 19b umfassen jeweils einen Schlitz 20, der sich in Längsrichtung des Befestigungselements 17, 21, d. h. mit einer Richtungskomponente in vertikaler Richtung Z, an der Vorderseite 25 des Befestigungselements 17, 21 erstreckt. Die beiden sich gegenüberliegenden Schlitze 20 des Befestigungselements 17 bzw. 21 sind zum oberen und zum unteren Ende des Befestigungselements 17 bzw. 21 hin geöffnet, um jeweils ein pilzkopfförmiges Befestigungsmittel der Verkleidungselemente 12, 14 bzw. 13, 15 aufzunehmen. Die Befestigungsmittel sind an den Rückseiten der Verkleidungselemente 12-15 ausgebildet und in den Figuren nicht sichtbar.

Zur Befestigung der Verkleidungselemente 12 bis 15 an dem Befestigungselement 16, 17 wird ein pilzkopfförmiges Befestigungsmittel des oberen Verkleidungselement bzw. Seitenwandpaneels 12, 13 von oben in das Befestigungselement 17, 21 geschoben. Analog dazu wird ein gleichartig oder ähnlich gestaltetes Befestigungsmittel des unteren Verkleidungselements bzw. Dado-Paneels 14, 15 von unten in das Befestigungselement 17, 21 geschoben.

Dabei wird ein relativ breites Kopfteil des pilzkopfförmigen Befestigungsmittels in die Aufnahme 19a bzw. 19b des Befestigungselements 17, 21 eingeführt, wobei ein relativ schmaler Halsbereich des pilzkopfförmigen Befestigungsmittels in dem relativ schmalen Schlitz 20 des Befestigungselements 17, 21 geführt wird, so dass das Kopfteil hinter der Vorderseite 25 des Befestigungselements 17, 21 gehalten wird.

Im eingeführten Zustand sind die pilzkopfförmigen Befestigungsmittel in den jeweiligen Schlitzen 20 in vertikaler Richtung Z einstellbar positionierbar. Sie sind derart ausgebildet, dass sie nach dem Positionieren in der jeweils individuell eingestellten vertikalen Position A bzw. B gehalten werden. Auf diese Weise kann jedes obere Verkleidungselement 12, 13 an dem Befestigungselement 17, 21 in vertikaler Richtung flexibel bzw. einstellbar an der vertikalen Position A positioniert und befestigt werden, und unabhängig davon kann jedes untere Verkleidungselement 14, 15 an dem Befestigungselement 17, 21 in vertikaler Richtung flexibel bzw. einstellbar an der vertikalen Position B positioniert und befestigt werden.

Das Befestigungselement 17, 21 ist also derart ausgebildet, dass die Positionen A der oberen Verkleidungselemente bzw. Seitenwandpaneele 12, 13 und die Positionen B der unteren Verkleidungselemente bzw. Dado-Paneele 14, 15 in vertikaler Richtung Z für jedes einzelne Verkleidungselement unabhängig voneinander einstellbar und an dem Befestigungselement 17 bzw. 21 fixierbar sind. Die Schlitze 20 im Befestigungselement 17, 21 erlauben auf diese Weise eine Toleranzkompensation der Innenraumkomponenten bzw. Verkleidungselemente in vertikaler bzw. Z-Richtung.

Durch die Verstellbarkeit in Längsrichtung wird es ermöglicht eine einheitlich, gleichmäßig verlaufende optische Linien der so montierten Seitenwandpaneele und unteren Verkleidungselemente bzw. Dado-Paneele zu erzeugen.

Übliche Schwingungsdämpfer werden an den Seitenwandpaneelen 12, 13 befestigt, wodurch die Befestigungselement 17, 21 in kleiner Bauweise ausgeführt werden können.

Wie in den **Figuren 1** **und** **2a** dargestellt, ist das zweite Befestigungselement 21 seitlich neben dem ersten Befestigungselement 17 angeordnet und kann mithilfe von Schrauben 22 an diesem befestigt werden. Das zweite Befestigungselement 21 ist zu diesem Zweck komplementär bzw. nicht symmetrisch zum ersten Befestigungselement 17 ausgestaltet, sodass sich die beiden nebeneinander angeordneten Befestigungselemente 17, 21 jeweils in einem Teilbereich 23, 24 gegenseitig überlappen, durch den sich die Schrauben 22 erstrecken.

Dabei ist der Teil- bzw. Überlappungsbereich 23 des ersten Befestigungselements 17 an der einen Seite des Befestigungselements 17 angeordnet, während der Überlappungsbereich 24 des zweiten Befestigungselements 21 an der anderen Seite des Befestigungselements 21 angeordnet ist.

Im Überlappungsbereich 24 des Befestigungselements 21 sind Langlöcher 22a ausgebildet (s. Fig. 2b), durch welche sich die beiden Schrauben 22 erstrecken. Dadurch ist eine Einstellung der Position des Befestigungselements 21 relativ zum Befestigungselement 17 in X-Richtung bzw. in horizontaler Richtung möglich, wodurch die finale Orientierung des oberen und des unteren am Befestigungselement 21 befestigten Verkleidungselements auf einfache Weise durchgeführt werden kann. Durch die Langlöcher 22a können auch unterschiedliche Materialstärken der Tragstruktur 11 bzw. des Spants kompensiert werden.

Das Befestigungselement 17 bzw. 21 ist jeweils an einer Basishalterung 16 mittels Schrauben 18 befestigt. Die Schrauben erstrecken sich durch Langlöcher 18a des Befestigungselements 17, 21, die sich in der horizontalen Richtung X erstrecken (s. Figs. 2a, 2b). Auf diese Weise ist die horizontale Position C des Befestigungselements 17, 21 in horizontaler Richtung X einstellbar an der Basishalterung 16 befestigt (s. Fig. 1). Dadurch kann das Befestigungselement 17, 21 zusammen mit dem daran befestigten oberen Verkleidungselement 12 bzw. 13 und dem unteren Verkleidungselement 14 bzw. 15 in X-Richtung relativ zur Basishalterung verschoben werden.

Die beiden gegenseitig befestigten Befestigungselemente 17, 21 können zusammen und bevorzugt auch gemeinsam mit den daran befestigten Verkleidungselementen 12 bis 15 aufgrund der Langlöcher 18a gemeinsam in X-Richtung relativ zur Basishalterung verschoben werden.

Die Basishalterung 16 ist als ein A-Bracket bzw. als ein Bracket oder Halter der Klasse A ausgebildet und wird zum Beispiel durch Nieten oder Schrauben fest an der Tragstruktur 11 fixiert. Das Befestigungselement 17, 21 ist als ein B-Bracket bzw. als ein Bracket oder Halter der Klasse B ausgebildet und auf der Basishalterung bzw. dem A-Bracket 16 lösbar befestigt und hierzu zum Beispiel mittels der Schrauben 18 verschraubt.

Wie in **Fig. 3** dargestellt, verbindet jeweils ein Befestigungssystem 10 mit Hilfe der an den Rückseiten der Verkleidungselementen 12 bis 15 angeordneten Befestigungsmittel ein oberes Verkleidungselement 12, 13 und ein unteres Verkleidungselement 14, 15 mit der dahinter liegenden Tragestruktur bzw. dem Spant 11. Die Positionen der rückseitig gelegenen Befestigungssysteme 10 sind in der Figur durch die Bereiche 32 gekennzeichnet.

Das Befestigungselement 17, 21 kann wie oben beschrieben in der horizontalen Richtung flexibel d.h. variabel eingestellt werden. Dadurch kann das an dem Befestigungselement 17 bzw. 21 befestigte obere Verkleidungselement 13 bzw. 14 gemeinsam mit dem unteren Verkleidungselement 15 bzw. 16 in horizontaler Richtung X variabel positioniert und fixiert werden.

Mit zwei seitlich aneinander befestigten Befestigungselementen 17, 21 können zwei Seitenwandpaneele 12, 13 nebeneinander mithilfe des Befestigungssystems 10 am Spant 11 befestigt werden, und zusätzlich können unterhalb der Seitenwandelemente 12, 13 zwei Dado-Paneele 14, 15 nebeneinander mithilfe desselben Befestigungselements 10 am Spant 11 befestigt werden.

Dabei können die Seitenwandpaneele 12, 13 unabhängig voneinander in ihrer vertikalen Position A eingestellt und fixiert werden, was durch die Doppelpfeile A in Fig. 3 gekennzeichnet ist. Das heißt, die Seitenwandpaneele 12, 13 sind in vertikaler Richtung Z flexibel bzw. variabel befestigbar.

Unabhängig davon können auch die Dado-Paneele 14, 15 unabhängig voneinander in ihrer vertikalen Position B positioniert eingestellt und fixiert werden, was durch die Doppelpfeile B gekennzeichnet ist. Das heißt, auch die Dado-Paneele 14, 15 sind in vertikaler Richtung Z variabel fixierbar bzw. befestigbar.

Weiterhin sind die Seitenwandpaneele 12, 13 und die Dado-Paneele 14, 15 gemeinsam in der horizontalen Richtung X einstellbar, was durch die Doppelpfeile C gekennzeichnet ist. Eine horizontale Verbindung zwischen den seitlichen äußeren Bereichen D und E einer Anordnung von zwei oder mehr Seitenwandpaneelen 13, 14 und/oder Dado-Paneelen 14, 15 ist nicht notwendig. Die Seitenwandpaneele 13, 14 sind oben mit nicht dargestellten Schnellverschlüssen befestigt.

Wie in den rückseitigen Ansichten der **Figuren 2c und 2d** gezeigt, umfasst die an der Rückseite des jeweiligen Befestigungselements 17, 21 montierte bzw. montierbare Basishalterung 16 mehrere Tragarme 27, die im montierten Zustand des Befestigungssystems 10 horizontal ausgerichtet sind, sowie eine senkrecht zu diesen ausgerichtete Verbindungsplatte 28, deren Vorderseite eine Befestigungsfläche für das jeweils anzuschraubende Befestigungselement 17, 21 bietet. An den Enden der Tragarme 27 sind flächig ausgebildete Verbindungsstücke 29 ausgebildet, die Befestigungsflächen zur Befestigung der Basishalterung 16 an der Tragstruktur 11 bilden. Die Befestigung erfolgt dabei vorzugsweise mittels Schrauben.

**Fig. 4** zeigt eine Ansicht schräg von oben auf das Befestigungssystem 10, das beidseitig am Spant 11 befestigt ist. Dabei ist auf beiden Seiten des Spants 16 jeweils eine Basishalterung 16 befestigt. Die Tragarme 27 jeder Basishalterung 16 erstrecken sich vom Spant 11 ausgehend nach vorne zu den Befestigungselementen 17, 21 mit ihren jeweiligen oberen Aufnahmen 19a und Schlitzen 20.

Zwischen der an der Tragstruktur 11 und dem an jeder Seite daran befestigten bzw. aufgeschraubten Bracket, welches die Basishalterung 16 bildet, kann eine Isolierung geklemmt werden. Dazu wird die Isolierung über die Tragstruktur 11 gelegt, und darauf wird das jeweilige Bracket montiert. Das heißt, es können zwei gleiche Brackets, die jeweils an einer Seite 11a der Tragstruktur 11 montiert werden, die Isolierung von beiden her Seiten fixieren. Dadurch ist es nicht mehr notwendig, einen Schnitt oder eine Aussparung in der Isolierung vorzusehen, so dass im Bereich der Befestigung der Verkleidungselemente kein Kondenswasser in das Kabineninnere gelangen kann.

Um die Anzahl der Bauteile zu reduzieren, kann das A-Bracket sowohl auf beiden Seiten des Flugzeugs als auch auf beiden Seiten des Tragelements 11 bzw. Rahmens oder Spants befestigt bzw. installiert werden.

Die Brackets, d.h. die Basishalterung 16 und die Befestigungselemente 17, 21, sind im Spritzgussverfahren hergestellt. Zur leichteren Entnahme zum Beispiel des Befestigungselements 17 bzw. 21 aus der Spritzgussmaschine ist diese hinter dem Schlitz 20 geöffnet. Bevorzugt sind die Basishalterung 16 und oder die Befestigungselemente 17, 21 aus Kunststoff oder aus Aluminium gefertigt.

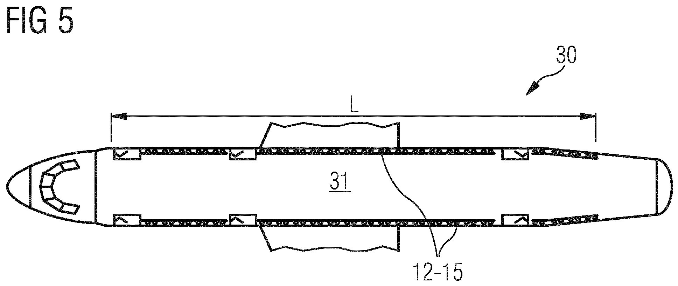

Schließlich zeigt **Fig. 5** ein Flugzeug 30, in dem an beiden Seiten seiner Kabine 31 Verkleidungselemente 12-15 mit Hilfe einer Anzahl der erfindungsgemäßen der Befestigungssysteme 10 befestigt sind, wie durch den Doppelpfeil L gekennzeichnet.

Die Erfindung ermöglicht insbesondere ein Bracket- bzw. Befestigungssystem, das einstellbar ist und die Befestigung verschiedenartiger Kabinenkomponenten erlaubt. Darüber hinaus muss nicht jedes einzelne Befestigungselement am Befestigungsort passend zusammengesetzt und exakt ausgerichtet montiert werden. Stattdessen können die einzelnen Befestigungssysteme bereits vormontiert an der Tragstruktur z.B. an wenigen Löchern befestigt und anschließend leicht eingestellt bzw. angepasst werden. Auch können die Verkleidungselemente schnell und auf einfache Weise montiert und ausgerichtet werden. Darüber hinaus werden nur sehr wenige unterschiedliche Teile benötigt, die an beiden Seiten der Kabine und auch an beiden Seiten der jeweiligen Tragstruktur verwendet werden können.

Um eine Vorausrichtung bei der Montage der Bauteile zu gewährleisten, werden Markierungen, Kerben, oder kleine Löcher in den Bauteilen integriert. Wenn diese Markierungen übereinstimmen sind die Bauteile optimal vorausgerichtet, dies soll die Montage vereinfachen. Später, bei der Ausrichtung der Verkleidungselemente, kann von der Vorausrichtung abgewichen werden.

Durch das Befestigungssystem gemäß der Erfindung wird die Montagezeit für die Anbringung von Verkleidungselementen deutlich reduziert. Darüber hinaus wird eine Gewichtsreduktion erzielt, und es werden Kosten gespart.

### Bezugszeichenliste:

- 10: Befestigungssystem
- 11: Tragstruktur / Spant
- 11a: Seite der Tragstruktur
- 12, 13: Verkleidungselemente bzw. Seitenwandpaneele
- 14, 15: Verkleidungselemente bzw. Dado-Paneele
- 16: Basishalterung
- 17, 21: Befestigungselemente
- 18: Schrauben
- 18 a: Langlöcher
- 19a, 19b: Aufnahme
- 20: Schlitz
- 22: Schrauben
- 22 a: Langlöcher
- 23, 24: Überlappungsbereich
- 25: Vorderseite des Befestigungselements
- 26: Fensteröffnung
- 27: Tragarme
- 28: Verbindungsplatte
- 29: Verbindungsstücke
- 30: Flugzeug
- 31: Kabine
- 32: Positionen der Befestigungssysteme

- A, B: einstellbare vertikale Positionen
- C: einstellbare horizontale Position
- D, E: seitliche Bereiche
- L: Anordnung von Befestigungssystemen
- X: horizontale Richtung
- Z: vertikale Richtung

## Patentansprüche

1. Befestigungssystem zur Befestigung von Verkleidungselementen in einem Flugzeug, umfassend:
mindestens eine Basishalterung (16) zur Befestigung an einer Tragstruktur (11); und
mindestens ein Befestigungselement (17, 21), das zur Befestigung eines oberen Verkleidungselements (12, 13) und eines unterhalb davon anzuordnenden unteren Verkleidungselements (14, 15) ausgebildet ist und an der Basishalterung (16) befestigbar ist,
wobei das Befestigungselement (17, 21) in horizontaler Richtung (X) einstellbar an der Basishalterung (16) befestigbar ist,
und das Befestigungselement (17, 21) eine sich in vertikaler Richtung erstreckende erste Aufnahme (19a) für ein Befestigungsmittel des oberen Verkleidungselements (12, 13) und eine weitere sich in vertikaler Richtung erstreckende zweite Aufnahme (19b) für ein Befestigungsmittel des unteren Verkleidungselements (14, 15) umfasst,
wobei die zweite Aufnahme (19b) des Befestigungselements (17, 21) derart ausgebildet ist, dass die Position des unteren Verkleidungselements (14, 15) an dem Befestigungselement (17, 21) unabhängig von der Position des oberen Verkleidungselements (12, 13) in vertikaler Richtung (Z) einstellbar und fixierbar ist,
und die erste Aufnahme (19a) des Befestigungselements (17, 21) derart ausgebildet ist, dass die Position des oberen Verkleidungselements (12, 13) an dem Befestigungselement (17, 21) in vertikaler Richtung (Z) einstellbar und variabel fixierbar ist,
**dadurch gekennzeichnet, dass**
das mindestens eine Befestigungselement ein erstes Befestigungselement (17) und ein zweites Befestigungselement (21) umfasst, wobei das erste Befestigungselement (17) zur Verbindung mit dem zweiten, seitlich anzuordnendem, Befestigungselement (21) ausgebildet ist, wobei die beiden Befestigungselemente (17, 21) in horizontaler Richtung (X) relativ zueinander einstellbar und aneinander fixierbar sind,
wobei
a) die Befestigungselemente (17, 21) im seitlich aneinander befestigten Zustand paarweise relativ zur Basishalterung (16) in horizontaler Richtung (X) verschiebbar sind; und/oder
b) das erste Befestigungselement (17) mindestens ein sich in horizontaler Richtung erstreckendes Langloch (22a) zur gegenseitigen Befestigung mit dem zweiten Befestigungselement (21) umfasst; und/oder
c) die beiden seitlich aneinander anzuordnenden Befestigungselemente (17, 21) komplementär zueinander ausgebildet sind, um sich im seitlich aneinandergefügten Zustand jeweils mit einem Teilbereich (23, 24) zu überlappen.

2. Befestigungssystem nach Anspruch 1, **dadurch gekennzeichnet, dass** das Befestigungsmittel pilzkopfförmig ausgebildet ist.

3. Befestigungssystem nach Anspruch 1 oder 2, **dadurch gekennzeichnet, dass** das Befestigungselement (17, 21) mindestens einen nach oben geöffneten Schlitz (20) und mindestens einen nach unten geöffneten Schlitz (20) aufweist, die sich zumindest mit einer Richtungskomponente in vertikaler Richtung erstrecken, um das obere Verkleidungselement (12, 13) von oben und das untere Verkleidungselement (14, 15) von unten in das Befestigungselement (17, 21) einzuschieben.

4. Befestigungssystem nach einem der vorhergehenden Ansprüche, **dadurch gekennzeichnet, dass** das Befestigungselement (17, 21) ein oder mehrere sich in horizontaler Richtung (X) erstreckende weitere Langlöcher (18a) zur Befestigung an der Basishalterung (16) umfasst.

5. Befestigungssystem nach einem der vorhergehenden Ansprüche, **dadurch gekennzeichnet, dass** die Basishalterung (16) zur symmetrischen Befestigung an zwei sich gegenüber liegenden Seiten der Tragstruktur (11) ausgebildet ist.

6. Befestigungssystem nach einem der vorhergehenden Ansprüche, **dadurch gekennzeichnet, dass** die Basishalterung (16) zusammen mit einer weiteren Basishalterung (16) zur paarweisen Befestigung an sich gegenüber liegenden Seiten (11a) der Tragstruktur (11) ausgebildet ist, um ein Paar von Befestigungselementen (17, 21) an dem Paar von Basishalterungen (16) zu befestigen.

7. Befestigungssystem nach einem der vorhergehenden Ansprüche, **dadurch gekennzeichnet, dass** die Basishalterung (16) als ein Klasse-A-Bracket zur festen Fixierung an der Tragstruktur (11) ausgebildet ist, und das Befestigungselement (17, 21) als ein Klasse-B-Bracket zur lösbaren Befestigung auf dem Klasse-A-Bracket ausgebildet ist.

8. Befestigungssystem nach einem der Ansprüche 3 bis 7, **dadurch gekennzeichnet, dass** das Befestigungselement (17, 21) an seiner dem Schlitz (20) gegenüberliegenden Seite offen ist.

9. Befestigungssystem nach einem der vorhergehenden Ansprüche, **dadurch gekennzeichnet, dass** es mittels Spritzgießen gefertigt ist.

## Claims

1. Fastening system for fastening trim elements in an aircraft, comprising:
at least one base holder (16) for fastening to a support structure (11); and
at least one fastening element (17, 21), which is designed for fastening an upper trim element (12, 13) and a lower trim element (14, 15) to be arranged below said upper trim element, and which is able to be fastened to the base holder (16),
wherein the fastening element (17, 21) is able to be fastened to the base holder (16) so as to be adjustable in the horizontal direction (X),
and the fastening element (17, 21) comprises a first receptacle (19a), which extends in the vertical direction, for a fastening means of the upper trim element (12, 13), and a further second receptacle (19b), which extends in the vertical direction, for a fastening means of the lower trim element (14, 15),
wherein the second receptacle (19b) of the fastening element (17, 21) is designed in such a manner that the position of the lower trim element (14, 15) is able to be fixed and adjusted in the vertical direction (Z) on the fastening element (17, 21), independently of the position of the upper trim element (12, 13),
and the first receptacle (19a) of the fastening element (17, 21) is designed in such a manner that the position of the upper trim element (12, 13) is able to be fixed so as to be adjustable and variable in the vertical direction (Z) on the fastening element (17, 21),
**characterized in that**
the at least one fastening element comprises a first fastening element (17) and a second fastening element (21), wherein the first fastening element (17) is designed to connect to the second fastening element (21) that is to be arranged laterally, wherein
the two fastening elements (17, 21) are able to be adjusted relative to one another and fixed to one another in the horizontal direction (X),
wherein
a) the fastening elements (17, 21), in the state fastened laterally to one another, are displaceable in pairs in the horizontal direction (X) relative to the base holder (16); and/or
b) the first fastening element (17) comprises at least one elongate bore (22a) extending in the horizontal direction for mutual fastening to the second fastening element (21); and/or
c) the two fastening elements (17, 21) to be arranged laterally on one another are designed to be mutually complementary in order to overlap in each case with a sub-region (23, 24) in the laterally joined state.

2. Fastening system according to Claim 1, **characterized in that** the fastening means is designed to be mushroom-shaped.

3. Fastening system according to Claim 1 or 2, **characterized in that** the fastening element (17, 21) has at least one upwardly open slot (20) and at least one downwardly open slot (20), which extend in the vertical direction at least with a directional component, so as to insert the upper trim element (12, 13) from above and the lower trim element (14, 15) from below into the fastening element (17, 21).

4. Fastening system according to one of the preceding claims, **characterized in that** the fastening element (17, 21) comprises one or a plurality of further elongate bores (18a), which extend in the horizontal direction (X), for fastening to the base holder (16).

5. Fastening system according to one of the preceding claims, **characterized in that** the base holder (16) is designed for symmetrical fastening to two opposite sides of the support structure (11).

6. Fastening system according to one of the preceding claims, **characterized in that** the base holder (16), conjointly with a further base holder (16), is designed to be fastened in pairs to opposite sides (11a) of the support structure (11) so as to fasten a pair of fastening elements (17, 21) to the pair of base holders (16).

7. Fastening system according to one of the preceding claims, **characterized in that** the base holder (16) is designed as a class A bracket for permanent fixing to the support structure (11), and the fastening element (17, 21) is designed as a class B bracket for releasable fastening to the class A bracket.

8. Fastening system according to one of Claims 3 to 7, **characterized in that** the fastening element (17, 21) is open on its side opposite the slot (20).

9. Fastening system according to one of the preceding claims, **characterized in that** said fastening system is made by means of injection moulding.

## Revendications

1. Système de fixation destiné à fixer des éléments de revêtement dans un aéronef, comprenant :
au moins un support de base (16) destiné à être fixé à une structure porteuse (11) ; et
au moins un élément de fixation (17, 21), conçu pour fixer un élément de revêtement supérieur (12, 13) et un élément de revêtement inférieur (14, 15) devant être disposé au-dessous de celui-ci, et pouvant être fixé au support de base (16),
l'élément de fixation (17, 21) pouvant être fixé au support de base (16) de manière réglable dans la direction horizontale (X),
et l'élément de fixation (17, 21) comprenant un premier logement (19a), s'étendant dans la direction verticale, pour un moyen de fixation de l'élément de revêtement supérieur (12, 13), ainsi qu'un deuxième logement (19b), s'étendant dans la direction verticale, pour un moyen de fixation de l'élément de revêtement inférieur (14, 15),
le deuxième logement (19b) de l'élément de fixation (17, 21) étant conçu de telle sorte que la position de l'élément de revêtement inférieur (14, 15) sur l'élément de fixation (17, 21) soit réglable et fixable dans la direction verticale (Z) indépendamment de la position de l'élément de revêtement supérieur (12, 13),
et le premier logement (19a) de l'élément de fixation (17, 21) étant conçu de telle sorte que la position de l'élément de revêtement supérieur (12, 13) sur l'élément de fixation (17, 21) soit réglable et fixable de manière variable dans la direction verticale (Z),
**caractérisé en ce que**
l'au moins un élément de fixation comprend un premier élément de fixation (17) et un deuxième élément de fixation (21), le premier élément de fixation (17) étant conçu pour être relié au deuxième élément de fixation (21) devant être disposé latéralement,
les deux éléments de fixation (17, 21) étant réglables l'un par rapport à l'autre dans ma direction horizontale (X) et pouvant être fixés l'un à l'autre,
dans lequel
a) les éléments de fixation (17, 21), dans l'état fixé latéralement l'un à l'autre, peuvent être déplacés par paires par rapport au support de base (16) dans la direction horizontale (X) ; et/ou
b) le premier élément de fixation (17) comprend au moins un trou oblong (22a) s'étendant dans la direction horizontale et destiné à la fixation mutuelle avec le deuxième élément de fixation (21) ; et/ou
c) les deux éléments de fixation (17, 21) devant être disposés latéralement l'un à l'autre sont conçus de manière complémentaire l'un par rapport à l'autre afin de se chevaucher chacun avec une zone partielle (23, 24) dans l'état assemblé latéralement l'un à l'autre.

2. Système de fixation selon la revendication 1, **caractérisé en ce que** le moyen de fixation est conçu sous forme de tête de champignon.

3. Système de fixation selon la revendication 1 ou 2, **caractérisé en ce que** l'élément de fixation (17, 21) présente au moins une fente (20) ouverte vers le haut et au moins une fente (20) ouverte vers le bas, qui s'étendent au moins avec une composante de direction dans la direction verticale, afin d'insérer l'élément de revêtement supérieur (12, 13) par le haut et l'élément de revêtement inférieur (14, 15) par le bas dans l'élément de fixation (17, 21).

4. Système de fixation selon l'une des revendications précédentes, **caractérisé en ce que** l'élément de fixation (17, 21) comprend un ou plusieurs autres trous oblongs (18a) s'étendant dans la direction horizontale (X) pour la fixation au support de base (16).

5. Système de fixation selon l'une des revendications précédentes, **caractérisé en ce que** le support de base (16) est conçu pour une fixation symétrique sur deux côtés opposés de la structure porteuse (11).

6. Système de fixation selon l'une des revendications précédentes, **caractérisé en ce que** le support de base (16) est conçu, conjointement avec un autre support de base (16), pour une fixation par paires sur des côtés (11a) opposés de la structure porteuse (11), afin de fixer une paire d'éléments de fixation (17, 21) sur la paire de supports de base (16).

7. Système de fixation selon l'une des revendications précédentes, **caractérisé en ce que** le support de base (16) est conçu comme un support de classe A destiné à être fixé de manière fixe à la structure porteuse (11), et l'élément de fixation (17, 21) est conçu comme un support de classe B destiné à être fixé de manière amovible sur le support de classe A.

8. Système de fixation selon l'une des revendications 3 à 7, **caractérisé en ce que** l'élément de fixation (17, 21) est ouvert sur son côté opposé à la fente (20).

9. Système de fixation selon l'une des revendications précédentes, **caractérisé en ce qu'**il est fabriqué par moulage par injection.
